# EUROPEAN PATENT APPLICATION

(11) **EP 4 312 385 A1**
(43) Date of publication of application: **31.01.2024**
(21) Application number: 22186917.5
(22) Date of filing: 26.07.2022
(51) Int. Cl.: H04B 7/06, H04B 1/3827

(54) **A CONTROLLER FOR REGULATING A BEAMFORMING ANTENNA SYSTEM**

(71) Applicant: Siemens Aktiengesellschaft, 80333 München (DE)
(72) Inventor: Kornbichler, Andreas, 83623 Dietramszell (DE); Michailow, Nicola, 81825 München (DE)
(74) Representative: Siemens Patent Attorneys

(57) **Abstract**

The embodiments propose beamforming with an additional objective to reduce or avoid electromagnetic radiation exposure at a given or determined location of a sensitive object, e.g., a living object. Instead of currently known beamforming with the objective to increase the received signal strength at a given location, the proposed beamforming has the additional objective to reduce or avoid electromagnetic radiation exposure for one or more sensitive objects in the radiation area of an antenna system.

## Description

### TECHNICAL FIELD

The disclosed embodiments generally relate to the field of beamforming antenna systems. Specifically, the disclosed embodiments relate to a method and a controller for regulating a beamforming antenna system.

### BACKGROUND

Antenna-based communication systems may utilize beamforming in order to create steered antenna beams with an antenna array. Beamforming systems may adjust a phase and/or a gain of each of the signals transmitted by radiation elements of an antenna array in order to create patterns of constructive and destructive inference at certain angular directions.

Selecting the phase and gain of each radiation element, a beamforming architecture controls the resulting interference pattern in order to realize a steerable and adaptable radiation pattern providing different beam gains in different directions and areas. A beamforming antenna system may be used to increase capacity, reduce co-channel and adjacent channel interference, improve range, reduce transmitted power, and mitigate multipath propagation effects in wireless communication systems. Smart antennas may direct electromagnetic energy in a preferred direction such as towards the antenna of a base station.

### SUMMARY AND DESCRIPTION

Although beamforming antenna systems provide an improved solution in many applications compared to conventional nondirectional antenna systems, the influence of electromagnetic radiation on the physiology of living objects or sensitive objects in general has not been considered up to now. Although beamforming has been suggested for many reasons, no proposal has been made to deflect electromagnetic radiation from specific areas.

The present embodiments relate to a controller for regulating a beamforming antenna system. Regulating may include determining or obtaining at least one measurement in order to characterize an environment of the antenna system. Regulating may include taking control measures in order to influence a value of electromagnetic radiation. Regulating may include bringing back a locally excessive value of electromagnetic radiation below a specified limit value.

The beamforming antenna system may include a plurality of radiation elements configured to transmit radio signals. The transmission of radio signals may be based on - or, in other words: determined by - a set of radiation weights assigned to the plurality of radiation elements. Each contribution of an individual radiation element to the overall transmission of radio signals is determined by a radiation weight assigned to a specific radiation element. This radiation weight may include a phase shift and/or a gain assigned to the specific radiation element. The set of radiation weights may be organized in a vectorial format to form a beamforming vector. By tuning these radiation weights, the transmission of a radio signal causes the plurality of radiation elements to cooperatively form a spatially defined radiation field which shape and size may be controlled by adjusting the radiation weight.

The controller may be configured to detect a sensitive object in the spatially defined radiation field. The sensitive object may include electronic devices sensitive to electromagnetic radiation such as measurement equipment. The sensitive object may be sensitive to electromagnetic interference. Reducing the exposure may be necessary or in order to comply with the electromagnetic compatibility defined for the sensitive object.

The sensitive object may particularly include living objects such as human personnel being accidentally or unintentionally inside the radiation field.

The presence detection of sensitive objects may be indirectly or cooperatively operated, using one or more sensors or any other equipment for reporting one or more measurements or parameters, hereinafter collectively referred to as sensor equipment. These measurements may be assessed by the controller in order to detect or derive a living object - or more particularly, a human person - in the spatially defined radiation field. Sensor equipment for reporting measurements or parameters may include sensors operating in a higher or much higher frequency spectrum than the frequency of the radio communication network. As an example, the sensor equipment may operate in an optical spectrum or in a vicinity of optical spectra using light detection and ranging or LiDAR sensors, LiDAR cameras, optical or non-optical cameras, Time-of-Flight sensors or camera, infrared sensors and/ or spectroscopic analysis.

Additionally or alternatively, parameters, e.g. location coordinates, may be determined and/or assessed by the controller in order to derive a presence of a sensitive device or sensitive object in the spatially defined radiation field. Additionally or alternatively, location coordinates may be statically specified in order to permanently avoid radiation exposure of stationary sensitive objects.

The controller may use sensor input and electronically stored information, including stored rules, parameters and instructions, to determine whether or not one or more types of sensitive objects are present within the radiation field, radiation volume, or environment monitored by the controller. In general, sensor input is directly or indirectly related to some type of parameter, machine state, organization state, computational state, or physical environmental parameter. The controller may select operational modes and modify control schedules with respect to the presence and absence of the one or more sensitive objects. The controller may employ feedback information to continuously adjust the electronically stored parameters and rules in order to minimize the number of incorrect inferences with respect to the presence or absence of the one or more sensitive objects.

The presence detection of sensitive objects may include intrinsic localization and tracking system using the antenna system AAR itself. A spatial resolution may be achieved by performing the intrinsic beamforming capabilities of the antenna system AAR. A multi-object detection algorithm and a robust clustering technique may be utilized to locate and count multiple sensitive objects.

The presence detection of sensitive objects may include a dynamic monitoring of moving trajectories assigned to sensitive objects using a continuous tracking algorithm.

The presence detection of sensitive objects may include the beamforming antenna capabilities of the antenna system AAR itself. The detection may include transmitting, by the antenna system AAR, a directed first wireless signal towards at least one sensitive object through a wireless multipath channel and receiving, by the antenna system AAR, the reflected second wireless signal through the wireless multipath channel. The second wireless signal differs from the first wireless signal due to the wireless multipath channel and a modulation of the first wireless signal by the at least one sensitive object. The controller may be configured for obtaining a set of channel information of the wireless multipath channel based on the second wireless signal received by the antenna system AAR and tracking the at least one object simultaneously based on the set of channel information. Each channel information in the set may be associated with a respective one of the plurality of radiation elements in the antenna system AAR.

The presence detection of sensitive objects may include using he antenna system to transmit and receive directed millimeter-wave phase-array radar signals, e.g. in the 20 GHz to 122 GHz range and performing a scan of the environment using a millimeter-wave radar sensor to produce one or more sets of radar data and optionally performing micro-Doppler measurements on the sets of radar data.

The presence detection of living objects may include monitoring a temperature, breathing, body movement and limb movement of living objects.

Having identified one or more sensitive objects, the controller may determine a radiation pattern minimizing a radiation exposure of the one or more sensitive objects within the spatially defined radiation field. In a simple embodiment, the radiation pattern minimizing the radiation exposure may be the spatially defined radiation field less an environmental area or »white spot« around the sensitive object.

The controller may calculate a set of altered or refined radiation weights, which, when fed to said plurality of radiation elements, may cause said plurality of radiation elements to cooperatively form said radiation pattern minimizing said radiation exposure of the sensitive object within the spatially defined radiation field. Calculating a set of refined radiation weights - and, optionally, simulating the impact of the refined radiation weights on the plurality of radiation elements - may be performed in one operation step or, optionally, performed in an iterative process.

The controller may update the set of radiation weights by the set of refined radiation weights with the aim of selectively preventing one or more sensitive object of a high electromagnetic radiation exposure.

### DESCRIPTION OF THE DRAWING

The objects as well as further advantages of the present invention will become more apparent and readily appreciated from the following description of the preferred embodiments, taken in conjunction with the accompanying drawing accompanying drawing of which:
- FIG. 1:: is a schematic representation of a beamforming an-tenna system in a first phase; and;
- FIG. 2:: is a schematic representation of a beamforming an-tenna system in a second phase.

### DETAILED DESCRIPTION

Each generation of wireless communication systems - also referred to as 4G,5G,6G in the usual way of counting generations in wireless communication systems - has opened further frequency bands for public use. Not least because of this, a growing concern about the impact of electromagnetic radiation on human physiology is to be expected.

A basic assumption underlying the present embodiments is that electromagnetic radiation in wireless communication systems may be reduced or limited at times and places when and where there is no receiving device and/or no willingness to receive.

In current communication systems, signal processing technique known as beamforming is used in order to achieve directional transmission of wireless signals.

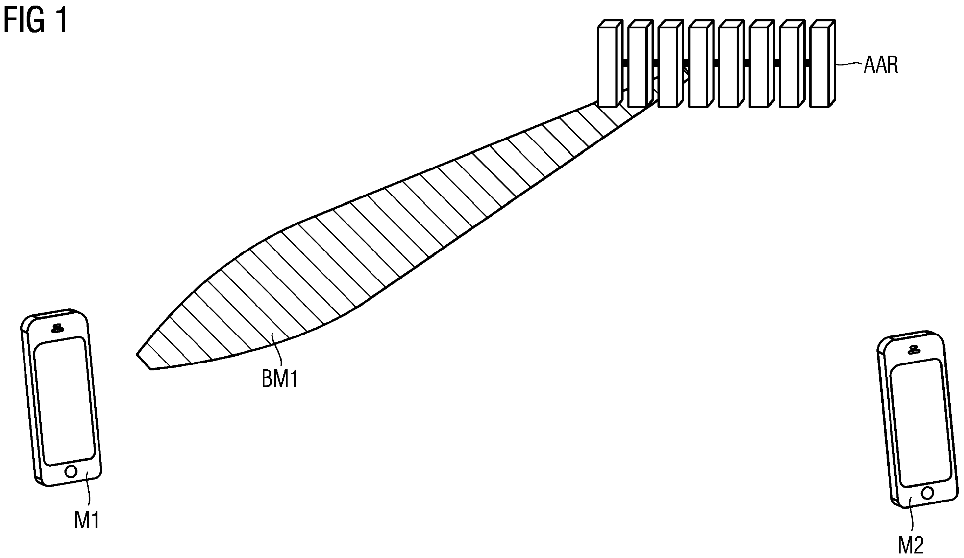

FIG. 1 shows a schematic representation of a beamforming antenna system AAR. The antenna system AAR may include an array of antennas as shown or, more general, a plurality of radiation elements configured to transmit radio signals based on a set of radiation weights. For the sake of clarity, further functional components of the communication system including this beamforming antenna system AAR are not shown in FIG. 1, including not shown amplifiers, controllers, RF transceivers or radio frequency transceivers, baseband modems, application processors, adaptive matching networks, beamforming controllers, usage detectors, presence detectors, etc. Those skilled in the art will recognize that a specific definition of these functional parts will depend on the particular application, and all such definitions are contemplated as within the scope of the present disclosure.

The plurality of radiation elements may be configured to transmit radio signals based on a set of radiation weights. Each radiation weight may be assigned to one or more of the plurality of radiation elements thereby causing the radiation elements to cooperatively form a spatially defined radiation field or radiation beam BM1. Relative phases of the respective signals feeding the radiation elements ay be varied in such a way that the effective radiation pattern of the array is reinforced in a desired direction and suppressed in undesired directions.

Thus, the antenna system AAR may be considered »directional« as the beam from the antenna system AAR may be directed (formed) in a desired direction. Beamforming may be particularly useful when preserving power, signal strength and operating time in communicating between devices, both from the antenna system AAR to one or more mobile clients M1, M2 as well as to/from the antenna system AAR and another antenna system, access point base station, etc.

In the beamforming antenna system AAR, the individual radiation elements may be controlled by radiation weights - which may be also referred to as »beamforming vector« - such that the radiation beam BM1 is amplified in a desired direction when all signals are superimposed, and ideally canceled out in undesired directions. These and other beamforming techniques allow for focusing the radiation beam BM1 at certain physical locations.

In the radiation elements, beamforming vectors may be dynamically adjusted by a controller of the antenna system AAR - or by a communication system controlling the antenna system - whereby the main objectives are as follows:
- Maximizing the signal strength on a reception side of a communication link between the antenna system AAR and a first mobile client M1 of the communication system;
- Avoiding interference with at least one second mobile clients M2 which is not participating in the current communication link.

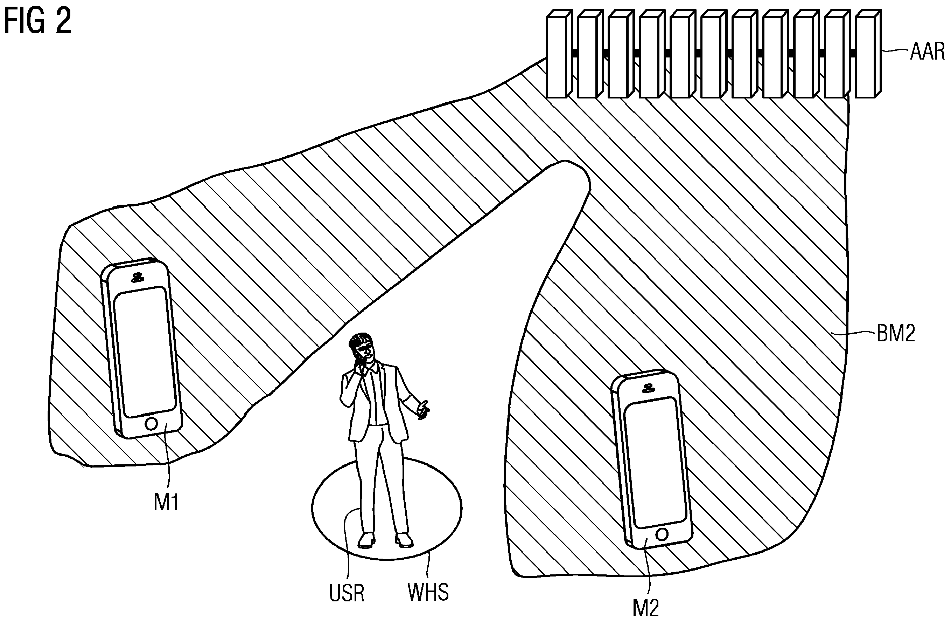

FIG. 2 shows a schematic representation of a beamforming antenna system AAR in another embodiment and/or in another phase. Obviously, the radiation beam BM2 according to this embodiment differs from the radiation beam BM1 according to the embodiment as shown in FIG. 1.

Hereby a - not shown - controller of the antenna system AAR may have detected a sensitive object USR in the spatially defined radiation field BM2. Due to the presence of this sensitive object USR, the controller may have determined a radiation pattern minimizing a radiation exposure of the sensitive object USR within the spatially defined radiation field, wherein the (determined) radiation pattern may largely conform with the (factual) radiation beam BM2 as shown in FIG. 1. In order to realize the determined radiation pattern, a set of refined radiation weights may have been calculated causing the plurality of radiation elements antenna system AAR to cooperatively form the determined radiation pattern.

After the set of radiation weights in the antenna systems AAR is updated by the set of refined radiation weights, a radiation beam BM2 as shown in FIG. 2 is adjusted. According to the shape of the radiation beam BM2 it can be seen that the objective of this beam forming control according to the embodiments has been achieved. The hatched area of the radiation beam BM2 exhibits a white space WHS around the sensitive object USR. In this area, the radiation exposure has been minimized while the remaining area of the radiation beam BM2 includes both mobile clients M1, M2.

A determination of the one or more white spaces WHS may be based on a spatial awareness in combination with a monostatic sensing. For the determination, the sensitive object USR may be regarded as passive in a sense that the sensitive object USR may not be a part of the communication network. The detection of the sensitive object in the spatially defined radiation field itself may either be operated by the controller - alternatively by a communication transceiver - which may be referred to as an integrated communications and sensing. Alternatively, said detection may be at least partially operated by an external sensor in the vicinity of the communication transceiver controller, which may be referred to as joint communications and sensing.

The inclusion of both mobile clients M1, M2 may have been a side effect of a further optimization task of the controller to additionally extend the radiation beam BM1 according to FIG. 1 in such a way that the communication link of the optimized radiation beam BM2 additionally includes the second mobile client M2. Although this further optimization can be of course handled on the side by the present embodiments, it is, however, not the core optimization objective of the present embodiments. The core optimization objective of the present embodiments is the minimization the radiation exposure of the sensitive object USR within the spatially defined radiation field.

The present embodiments are not restricted to a particular wireless transmission protocol. The wireless communication systems may consist of a plurality of wireless devices and a plurality of base stations. A base station can also be referred to as a node-B or NodeB, a base transceiver station, an access point or AP, a satellite, a router, or some other equivalent terminology. A base station typically contains one or more RF transmitters, RF receivers, or both electrically connected to one or more antenna systems AAR to communicate with wireless clients M1, M2.

A wireless client M1, M2 used in the wireless communication system may also be referred to as a mobile station, a terminal, a cellular phone, a wireless sensor, an automated guided vehicle, a wireless appliance, or some other equivalent terminology. The wireless client M1, M2 or wireless device may contain one or more RF transmitters, RF receivers or both electrically connected to one or more antennas to communicate with the antenna system AAR. Further, wireless clients M1, M2 may be fixed or mobile and may have the ability to move through a wireless communication network.

The embodiments, in summary, propose beamforming with the sole or additional objective to reduce or avoid electromagnetic radiation exposure at a given or determined location of a sensitive object, e.g., a living object. Instead of currently known beamforming with the objective to increase the received signal strength at a given location, the proposed beamforming has the sole or additional objective to reduce or avoid electromagnetic radiation exposure for one or more sensitive objects in the radiation area of the antenna system.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A controller for regulating a beamforming antenna system including a plurality of radiation elements configured to transmit radio signals based on a set of radiation weights assigned to the plurality of radiation elements and causing said plurality of radiation elements to cooperatively form a spatially defined radiation field, the controller configured to:
- detect a sensitive object in the spatially defined radiation field;
- determine a radiation pattern minimizing a radiation exposure of the sensitive object within the spatially defined radiation field;
- calculate a set of refined radiation weights causing said plurality of radiation elements to cooperatively form said radiation pattern; and;
- update the set of radiation weights by the set of refined radiation weights.

2. The controller according to claim 1, wherein the set of radiation weights includes a phase shift and/or a gain assigned to one or more of the plurality of radiation elements.

3. The controller according to one of the aforementioned claims, wherein the set of radiation weights is organized in a vectorial format.

4. The controller according to one of the aforementioned claims further using sensor input and/or electronically stored information to detect the sensitive object in the radiation field.

5. The controller according to one of the aforementioned claims, wherein intrinsic beamforming capabilities of the antenna system are used to detect the sensitive object in the spatially defined radiation field.

6. The controller according to one of the aforementioned claims, wherein a multi-object detection algorithm and/or a clustering technique are used to detect the sensitive object in the spatially defined radiation field.

7. The controller according to one of the aforementioned claims, wherein a dynamic monitoring of moving trajectories assigned to sensitive objects using a continuous tracking algorithm is used to detect the sensitive object in the spatially defined radiation field.

8. The controller according to one of the aforementioned claims, wherein the sensitive object is a moving or stationary object.

9. The controller according to claim 1 wherein the sensitive object is a living object.

10. A method for regulating a beamforming antenna system, said beamforming antenna system including a plurality of radiation elements configured to transmit radio signals based on a set of radiation weights assigned to the plurality of radiation elements and causing said plurality of radiation elements to cooperatively form a spatially defined radiation field, the method including the steps of:
- detecting a sensitive object in the spatially defined radiation field;
- determining a radiation pattern minimizing a radiation exposure of the sensitive object within the spatially defined radiation field;
- calculating a set of refined radiation weights causing said plurality of radiation elements to cooperatively form said radiation pattern; and;
- updating the set of radiation weights by the set of refined radiation weights.
